# EUROPÄISCHE PATENTSCHRIFT

(11) **EP 0 700 248 B1**
(45) Veröffentlichungstag und Bekanntmachung des Hinweises auf die Patenterteilung: **09.12.1998**
(21) Anmeldenummer: 94917634.1
(22) Anmeldetag: 16.05.1994
(51) Int. Cl.: A01N 35/02

(54) **CHEMISCHES DESINFEKTIONSMITTEL AUF BASIS PHENOLISCHER WIRKKOMPONENTEN UND GLUTARALDEHYD**
CHEMICAL DISINFECTANTS BASED ON PHENOLIC ACTIVE COMPONENTS AND GLUTARALDEHYDE
AGENTS DESINFECTANTS CHIMIQUES A BASE DE COMPOSANTS ACTIFS PHENOLIQUES ET D'ALDEHYDE GLUTARIQUE

(30) Priorität: 28.05.1993 DE 4317844
(43) Veröffentlichungstag der Anmeldung: 13.03.1996
(73) Patentinhaber: BAYER AG, 51368 Leverkusen (DE)
(72) Erfinder: EXNER, Otto, D-40878 Ratingen (DE); HOFFMANN, Manfred, D-47918 Tönisvorst (DE)
(86) Internationale Anmeldenummer: EP9401572
(87) Internationale Veröffentlichungsnummer: WO9427437

(56) Entgegenhaltungen:
- EP-A- 0 255 875
- EP-A- 0 264 658
- EP-A- 0 279 704
- EP-A- 0 553 628
- CA-A- 2 015 079
- CH-A- 340 013
- CH-A- 637 267
- DD-A- 220 893
- US-A- 3 917 850
- US-A- 4 654 374
- Disinfection in Veterinary and Farm Animal Practice, ed. A.H. Linton et al., pp. 71-75, "The inactivation or viruses by germicides", M. Klein et al., pp. 116-118
- Applied and Environmental Microbiology, 1991, pp. 1156-1160
- "Virucidal efficacy of Richtrezeptur C D 601 against poliovirus type I, strain Mahoney-Pette", Dr. J. Steinmann, 1992, Bayer Guide Formulation CD 601

## Beschreibung

Die Erfindung betrifft die Verwendung von mikrobiziden Phenolverbindungen in Kombination mit Glutaraldehyd zur Herstellung von Desinfektionsmitteln, die für die Desinfektion von Flächen und Instrumenten, aber auch von Körperteilen (z.B. Hände) in Krankenhäuser und Arztpraxen geeignet sind.

Es ist bekannt, daß Mlkroorganismen wie Bakterien und Hefen als auch humanpathogene Viren ein erhebliches Infektionsrisiko für Patienten und Personal im Krankenhaus und in der Arztpraxis darstellen. In Anbetracht des Infektionsrisikos für Patienten und Personal ist die Desinfektion von Oberflächen und Instrumenten in Krankenhaus und Arztpraxen besonderer Bedeutung beizumessen. Neben den bekannten Hospitalismuserreger aus dem Bereich der Bakterien und Hefen haben die Viren bei Desinfektionsmaßnahmen eine immer wichtigere Stellung eingenommen.

Die Anforderungen an die Wirksamkeit von Desinfektionsmitteln werden z.B. in den Vorschriften der DGHM (Dt. Gesellschaft für Hygiene und Mikrobiologie) sowie der Richtlinie des Bundesgesundheitamtes (BGA) und der Dt. Vereinigung zur Bekämpfung von Viruserkrankungen (DVV) beschrieben. Desinfektionsmittel, die den Anforderungen der DGHM erfüllen, sind in der VII-Liste Stand 1.1.92 aufgeführt. Angaben zur Viruzidie der Desinfektionsmittel enthalten diese Listen noch nicht.

Die erfindungsgemäße Kombination gewährleistet bei praxisrelevanten Anwendungszeiten- und konzentrationen eine hohe Reduktion pathogener Mikroorganismen aus den Bereichen Bakterien und Hefen sowie eine Inaktivierung z.B. DVV-gellsteter unbehüllter und behüllter Viren und erfüllt voll die gültigen Prüfrichtlinien. Die Erfindung basiert auf eine Kombination von mikrobiziden Phenolverbindungen (Ph) mit Glutaraldehyd (Glu).

Phenolische Wirksubstanzen zur Flächen- und Instrumentendesinfektion sind bekannt (Ullmann-Enzyklopädie der tech. Chemie, 4. Auflage 1975 Band 20, S. 41-58). Desweiteren ist bekannt, daß mikrobizide Phenolverbindungen eine unzureichende Wirkung bei unbehüllten Viren aufweisen. Es ist auch bekannt, daß ab 1 % Glutaraldehyd (10 000 ppm) in alkalischer Lösung eine Inaktivierung von unbehüllten Viren wie Polio ermöglicht wird.

In CA 2.015.079 wird ein Desinfektionsmittel aus Glu, o-Phenylphenol, p-tert.-Amylphenol, Na-arylalkylsulphonat, Zitronensäure und Wasser beschrieben. Durch Kombination der oben erwähnten Wirkstoffe wird auch im sauren Bereich eine Stabilisierung und Wirkung speziell gegen humanpathogene Bakterien erzielt. Eine viruzide Wirkung wird nicht beschrieben. Auch ist der Anteil von Glu in dieser Formulierung äußerst hoch, was zu Geruchs- und Korrosionsproblemen führt und gegebenenfalls allergische Reaktionen verursachen könnte.

Gegenstand der Erfindung ist daher die Verwendung einer Kombination von Glutaraldehyd mit 2-Phenyl-phenol, para-Chlor-meta-kresol und einem Säurungsmittel, wobei der prozentuale Gewichtsanteil der Phenolverbindungen größer ist als der prozentuale Gewichtsanteil von Glutaraldehyd, zur Desinfektion von Flächen und Instrumenten sowie von Körperteilen.

Die erfindungsgemäße Kombinationen erfüllen als Desinfektionsmittel folgende Anforderungen:
- breite Wirksamkeit gegen humanpathogene Bakterien (Hefen) und Viren;
- die auf den Oberflächen vorhandenen Keimzahlen bzw. Virustiter werden in praxisrelevanten Zeiten zuverlässig und entsprechend von Normen reduziert:
- die eingesetzten Wirkstoffkomponenten wurden so gewählt, daß mit möglichst geringen Einsatzkonzentrationen sowohl an phenolischen Mikrobiziden als auch an Glu eine optimale Wirksamkeit erzielt wird;
- geringste Glu-Konzentrationen in den Anwendungslösungen minimieren das Gefährdungspotential einer Geruchsbelästigung, einer möglichen Sensibilisierung sowie (Haut)-verfärbungen, bei voller Viruzide;
- Einsatz von hautfreundlichen und biologisch gut abbaubaren Tensiden;
- Haltbarkeit der Desinfektionsmittelkonzentrate von mind. einem Jahr.

Die erfindungsgemäßen Kombinationen liegen im allgemeinen in Form von flüssigen konzentrierten Formulierungen vor, die im allgemeinen nach Verdünnung mit Wasser erfindungsgemäß angewendet werden.

Die erfindungsgemäßen Konzentrate enthalten im allgemeinen 2-20 Gew.-%, vorzugsweise 3-15 Gew.-% und bevorzugt 3-12 Gew.-% der mikroboziden Phenolverbindungen. Das Verhältnis von o-Phenylphenol zu para-Chlor-meta-kresol beträgt dabei gegebenenfalls 100:0 bis 0:100 Gew.-Teile.

Die erfindungsgemäßen Konzentrate enthalten desweiteren 2-50 Gew.-%, vorzugsweise 2-10 Gew.-% und bevorzugt 2-5 Gew.-% Glutaraldehyd.

Die erfindungsgemäßen Konzentrate enthalten desweiteren vorzugsweise Säuerungsmittel wie Zitronensäure, Milchsäure und Äpfelsäure, um den pH-Wert der Zubereitungen auf 2 bis 7, vorzugsweise 2,3 bis 5, bevorzugt 2,5 bis 4 einzustellen.

Die erfindungsgemäßen Konzentrate enthalten desweiteren vorzugsweise noch bis zu 50 Gew.-%, insbesondere 10 bis 40 Gew.-% Hilfsmittel, wie Tenside, vorzugsweise anionische gegebenenfalls ethoxylierte Tenside wie z.B. sekundäre Alkylsulfonate mit durchschnittlich 12 bis 14 Kohlenstoffatomen, Alkylsulfosuccinate und/oder Alkylethersulfonate, Verdünnungsmittel wie z.B. Alkohole vorzugsweise Isopropanol, 1,2-Propandiol, Glykole und/oder mit Wasser mischbarer Verdünnungsmittel sowie übliche Hilfsstoffe wie Duftstoffe, Korrosionsinhibitoren wie Benzotriazol oder Tolyltriazol, Farbstoffe und/oder Komplexbildner und gegebenenfalls weitere desinfizierend wirkende Substanzen.

Desweiteren enthalten die erfindungsgemäßen Konzentrate bis zu 75 Gew.-%, insbesondere 10 bis 50 Gew.-% Wasser.

Ein bevorzugtes Konzentrat enthält
- 5 - 15: Gew.-% Phenolverbindungen
- 3 - 4: Gew.-% Glutaraledehyd
- 10 - 20: Gew.-% org. Verdünnungsmittel
- 5 - 25: Gew.-% Tenside
und aufgefüllt zu 100 Gew.-% Wasser.

Die erfindungsgemäßen Zubereitungen werden als Konzentrate in den Handel gebracht und im allgemeinen in wäßrigen Verdünnungen angewendet. Die wäßrigen Verdünnungen enthalten dann vorzugsweise 0,5 bis 5 % der erfindungsgemäßen Kombinationen.

Die Herstellung der erfindungsgemäßen Zubereitungen erfolgt in der üblichen Weise durch Zusammengabe der Einzelkomponenten bei guter Durchmischung bis klare Lösungen erzielt werden.

### Beispiele

Zur Prüfung der mikrobiziden und viruziden Wirksamkeit der erfindungsgemäßen Desinfektionsmittelkombination wird ein Konzentrat der folgenden Zusammensetzung durch Vermischen der Einzelbestandteile hergestellt.

| Beispiel 1 | Beispiel 2 | Beispiel 3 | Beispiel 4 |
|---|---|---|---|
| 4,5 Gew.-% para-Chlor-meta-kresol | - | 11,5 Gew.-% PCMC | 4,8 Gew.-% PCMC |
| 7,0 Gew.-% ortho-Phenylphenol | 11,5 Gew.-% OPP | - | 4,8 Gew.-% Pine Oil |
| 3,75 Gew.-% Glutaraldehyd | " | " | " |
| 2,0 Gew.-% Milchsäure | " | " | " |
| 15,0 Gew.-% Isopropanol | " | " | " |
| 10,0 Gew.-% Diisooctylsulfosuccinat | " | " | " |
| 10,0 Gew.-% Na-Laurylethersulfat (2 EO) aufgefüllt zu 100% mit demineralisiertem Wasser | " | " | " |

### Prüfung der bakteriologischen Wirksamkeit

### A. Qualitative Suspensionsdesinfektion gemäß Richtlinien für die Prüfung und Bewertung chemischer Desinfektionsmittelverfahren / DGHM (Stand 01.01.81) (Deutsche Gesellschaft für Hygiene und Mikrobiologie, Stuttgart-New York; Fischer Teilabschnitt 1 (J. Borneff; Sonderdruck 1.1.1981)).

Mit folgenden Verdünnungen des Konzentrats nach Beispiel 1 werden nach einer Kontaktzeit von 5 Minuten die in Tabelle 1 angegebenen Keimarten zu 100 % abgetötet.

**Tabelle 1**

| Prüfkeime | Anwendungskonzentration in % bei 5 min. Kontaktzeit |
|---|---|
| Staphyococcus aureus ATCC 6538 | 0,75 |
| Escherichia coli ATCC 11229 | 0,50 |
| Proteus mirabilis ATCC 14153 | 0,50 |
| Pseudomonas aeruginosa ATCC 15442 | 0,50 |
| Candida albicans ATCC 10231 | 0,25 |
| Aspergillus flumigatus DSM 819 | 1,00 |

### B. Tuberkulozide Wirksamkeit im Keimträgerversuch gemäß DGHM-Richtlinie I/2.4.2 modifiziert (Prüfbericht; L & S GmbH Bad Bocklet, Leimbeck/Grötsch 8.1.1993)

**Tabelle 2**

| Folgende Anwendungskonzentrationen in % weisen nach den angegebenen Einwirkzeiten eine tuberkulozide Wirksamkeit auf: | | | | |
|---|---|---|---|---|
| Prüfkeim | Einwirkzeit in Minuten | | | |
| | 15 | 30 | 60 | 120 |
| Mycobakterium terrae ATCC 15755 | 3 | 2 | 2 | 2 % |

### Viruzide Wirkdaten

### C. Viruzide Wirksamkeit gegen Hepatitis B (HBV) und HIV gemäß "DNS Polymerase Test" und HIV in Anlehnung an die "Richtlinie des Bundesgesundheitsamt und der Deutschen Vereinigung zur Bekämpfung der Viruskrankheiten zur Prüfung von chemischen Desinfektionsmitteln auf Wirksamkeit gegen Viren". (Prüfbericht: Steinmann 28.1.1993, Staatl. Hygieneinstitut Bremen)

Folgende Anwendungskonzentrationen in % und Einwirkzeiten werden ermittelt.

| Virus | % | Einwirkzeit in min. |
|---|---|---|
| Hepatitis B | 1,0 | 30 |
| | 0,5 | 60 |
| HIV-1 | 1,0 | 30 |
| | 0,5 | 60 |

### D. Viruzide Wirksamkeit gegen vorgeschriebene Viren der DVV gemäß "Richtlinie des Bundesgesundheitsamt (BGA) und der Deutschen Vereinigung zur Bekämpfung der Viruskrankheiten (DVV) zur Bekämpfung von chemischen Desinfektionsmitteln auf Wirksamkeit gegen Viren". (Prüfbericht; Steinmann 28.1.1993, Staatl. Hygieneinstitut Bremen)

Zur Inaktivierung unten angegebener Leit-Viren sind folgende Einsatzkonzentrationen in % erforderlich:

| Virus | % | Einwirkzeit in min. |
|---|---|---|
| Papova Virus SV 40 | 3,0 | 60 |
| Herpes simplex-Virus (HSV) Typ 1 | 0,5 | 5 |
| Polio Virus Typ 1 Stamm Malhony/Pette | 4,0 | 5 |
| Vaccinia Virus Stamm Elstree | 0,5 | 5 |
| Adeno Virus Typ 2 St. Adenoid | 1,0 | 30 |

## Patentansprüche

1. Desinfektionsmittel-Konzentrat enthaltend eine Kombination von Glutaraldehyd, 2-Phenyl-phenol, para-Chlor-meta-kresol und ein Säuerungsmittel und gegebenenfalls organische Verdünnungsmittel, Tenside und weitere Hilfsmittel, wobei der prozentuale Gewichtsanteil der phenolischen Komponente größer ist als der prozentuale Gewichtsanteil der Glutaraldehyd-Komponente.

2. Konzentrat gemäß Anspruch 1, enthaltend 3-12 Gew.-% der Phenolverbindungen und 2-5 Gew.-% Glutaraldehyd.

3. Konzentrat gemäß Anspruch 1, enthaltend 5-15 Gew.-% Phenolverbindungen und 3-4 Gew.-% Glutaraldehyd.

4. Konzentrat gemäß Anspruch 1, mit einem pH-Wert von 2 bis 7.

5. Konzentrat gemäß Anspruch 1, mit einem pH-Wert von 2,3 bis 5.

6. Konzentrat gemäß Anspruch 1, enthaltend als Säuerungsmittel Zitronensäure, Milchsäure und/oder Apfelsäure.

7. Verfahren zur Herstellung eines Desinfektionsmittels, dadurch gekennzeichnet, daß man ein wie in Anspruch 1 definiertes Konzentrat mit Wasser verdünnt.

8. Das gemaß Anspruch 7 erhältliche Desinfektionsmittel.

9. Verwendung einer Kombination von Glutaraldehyd, 2-Phenyl-phenol, para-Chlor-meta-kresol und Säuerungsmittel, wobei der prozentuale Gewichtsanteil der Phenolverbindungen größer ist als der prozentuale Gewichtsanteil von Glutaraldehyd zur Desinfektion von Flächen und Instrumenten sowie von Körperteilen.

10. Verfahren zum Desinfizieren von Flächen, Instrumenten und Körperteilen, dadurch gekennzeichnet, daß man eine Kombination von Glutaraldehyd, 2-Phenyl-phenol, para-Chlor-meta-kresol und Säuerungsmittel, wobei der prozentuale Gewichtsanteil der Phenolverbindungen größer ist als der prozentuale Gewichtsanteil von Glutaraldehyd, auf die Flächen, Instrumente und Körperteile einwirken läßt.

## Claims

1. Disinfectant concentrate comprising a combination of glutaraldehyde, 2-phenyl-phenol, para-chloro-meta-cresol and an acidifying agent and, if appropriate, organic diluents, surfactants and further auxiliaries, the percentage content by weight of the phenolic component being greater than the percentage content by weight of the glutaraldehyde component.

2. Concentrate according to Claim 1, comprising 3-12% by weight of the phenol compounds and 2-5% by weight of glutaraldehyde.

3. Concentrate according to Claim 1, comprising 5-15% by weight of phenol compounds and 3-4% by weight of glutaraldehyde.

4. Concentrate according to Claim 1, having a pH of 2 to 7.

5. Concentrate according to Claim 1, having a pH of 2.3 to 5.

6. Concentrate according to Claim 1, comprising citric acid, lactic acid and/or malic acid as the acidifying agent.

7. Process for the preparation of a disinfectant, characterized in that a concentrate as defined in Claim 1 is diluted with water.

8. The disinfectant obtainable according to Claim 7.

9. Use of a combination of glutaraldehyde, 2-phenyl-phenol, para-chloro-meta-cresol and acidifying agent, the percentage content by weight of the phenol compounds being greater than the percentage content by weight of glutaraldehyde, for disinfection of surfaces and instruments and of parts of the body.

10. Process for disinfecting surfaces, instruments and parts of the body, characterized in that a combination of glutaraldehyde, 2-phenyl-phenol, para-chloro-meta-cresol and acidifying agent, the percentage content by weight of the phenol compounds being greater than the percentage content by weight of glutaraldehyde, is allowed to act on the surfaces, instruments and parts of the body.

## Revendications

1. Concentré de produit désinfectant contenant une combinaison d'aldéhyde glutarique, de 2-phényl-phénol, de para-chloro-méta-crésol et un agent acidifiant et le cas échéant des diluants organiques, des agents tensioactifs et d'autres produits auxiliaires, le pourcentage en poids des composants phénoliques étant supérieur à celui du composant aldéhyde glutarique.

2. Concentré selon la revendication 1, contenant 3 à 12 % en poids des composés phénoliques et 2 à 5 % en poids d'aldéhyde glutarique.

3. Concentré selon la revendication 1, contenant 5 à 15 % en poids des composés phénoliques et 3 à 4 % en poids d'aldéhyde glutarique.

4. Concentré selon la revendication 1, à un pH de 2 à 7.

5. Concentré selon le revendication 1, à un pH de 2,3 à 5.

6. Concentré selon la revendication 1, contenant en tant qu'agent acidifiant l'acide citrique, l'acide lactique et/ou l'acide malique.

7. Procédé de préparation d'un produit désinfectant, caractérisé en ce que l'on dilue par l'eau un concentré tel que défini dans la revendication 1.

8. Le produit désinfectant obtenu selon la revendication 7.

9. Utilisation d'une combinaison d'aldéhyde glutarique, de 2-phényl-phénol, de para-chloro-méta-crésol et d'un agent acidifiant, le pourcentage en poids des composés phénoliques étant supérieur à celui de l'aldéhyde glutarique, pour la désinfection de surfaces et d'instruments et de parties du corps.

10. Procédé pour désinfecter des surfaces, des instruments et des parties du corps, caractérisé en ce que l'on fait agir sur les surfaces les instruments et les parties du corps une combinaison d'aldéhyde glutarique, de 2-phényl-phénol, de para-chloro-méta-crésol et d'un agent acidifiant, le pourcentage en poids des composés phénoliques étant supérieur à celui de l'aldéhyde glutarique.
